# EUROPÄISCHE PATENTANMELDUNG

(11) **EP 1 642 765 A2**
(43) Veröffentlichungstag der Anmeldung: **05.04.2006**
(21) Anmeldenummer: 05020178.9
(22) Anmeldetag: 16.09.2005
(51) Int. Cl.: B60N 2/20, E05B 65/12

(54) **Verriegelungssystem für einen Fahrzeugsitz**

(30) Priorität: 29.09.2004 DE 102004047402
(71) Anmelder: KEIPER GmbH & Co. KG, 67657 Kaiserslautern (DE)
(72) Erfinder: Krebs, Jürgen, 67806 Rockenhausen (DE); Goy, Reinhard, 67657 Kaiserslautern (DE); Müller, Peter, 67661 Kaiserslautern (DE); Yasaroglu, Kadir, 85053 Ingolstadt (DE)
(74) Vertreter: Patentanwälte Hosenthien-Held und Dr. Held

(57) **Zusammenfassung**

Bei einem Verriegelungssystem (5) für einen Fahrzeugsitz, insbesondere für einen Kraftfahrzeugsitz, mit einem Schloß (7) zum Vernegeln einer Lehne des Fahrzeugsitzes, einem Entriegelungselement (11), welches wenigstens zum Entriegeln mit dem Schloß (7) in Wirkverbindung steht, wobei das Entriegeln mit dem Betätigen eines Diebstahlsicherungselementes beginnt, steht das Diebstahlsicherungselement in Wirkverbindung mit einer Sperre (31), welche in einem gesicherten und verriegelten Zustand des Verriegelungssystems (5) das Entriegelungselement (11) und/oder dessen Zugänglichkeit sperrt und in einem entsicherten und verriegelten Zustand das Entriegelungselement (11) freigibt.

## Beschreibung

Die Erfindung betrifft ein Verriegelungssystem für einen Fahrzeugsitz, insbesondere für einen Kraftfahrzeugsitz, mit den Merkmalen des Oberbegriffs des Anspruches 1.

Bei einem als Rücksitz eines Kraftfahrzeuges mit Stufenheck ausgebildeten Fahrzeugsitz ist ein Verriegelungssystem dieser Art vorgesehen, bei welchem das Diebstahlsicherungselement im Kofferraum des Kraftfahrzeuges angeordnet ist und zugleich als Entriegelungselement für die Lehne dient. Auf diese Weise wird bei einem Einbruch in den Fahrgastraum vermieden, daß über ein Entriegeln und Schwenken der Lehne der vergleichsweise diebstahlsichere Kofferraum vom Fahrgastraum her zugänglich wird. Die Handhabung wird aber beim Vorklappen der Lehne unkomfortabel, weil die Lehne vom Kofferraum aus entriegelt und vom Fahrgastraum aus vorgeklappt werden muß, um vom Fahrgastraum aus den neu gewonnenen Laderaum zu befüllen. Außerdem kann die Gefahr bestehen, daß das Diebstahlsicherungselement im Kofferraum zwar betätigt wird, durch Ablenkung des Bedieners oder andere zwischenzeitliche Ereignisse aber kein Vorklappen der Lehne erfolgt, so daß diese unbemerkt unverriegelt ist.

Der Erfindung liegt die Aufgabe zu Grunde, ein Verriegelungssystem der eingangs genannten Art zu verbessern. Diese Aufgabe wird erfindungsgemäß durch ein Verriegelungssystem mit den Merkmalen des Anspruches 1 gelöst. Vorteilhafte Ausgestaltungen sind Gegenstand der Unteransprüche.

Dadurch, daß das Diebstahlsicherungselement in Wirkverbindung mit einer Sperre steht, welche in einem gesicherten und verriegelten Zustand des Verriegelungssystems das Entriegelungselement und/oder dessen Zugänglichkeit sperrt und in einem entsicherten und verriegelten Zustand das Entriegelungselement freigibt, wird die Funktion von Diebstahlsicherungselement und Entriegelungselement getrennt, wobei auch bei einem Betätigen des Diebstahlsicherungselements das Entriegelungselement zunächst unbetätigt und damit die Lehne verriegelt bleibt. Dies ermöglicht eine räumliche getrennte Anordnung, bei der das Diebstahlsicherungselement beabstandet vom Entriegelungselement und/oder vom Schloß angeordnet ist, vorzugsweise weiterhin im Kofferraum, während das Entriegelungselement in der Nähe des Schlosses und/oder an der Lehne oder in der Nachbarschaft der Lehne angeordnet ist, also vom Fahrgastraum aus zugänglich ist. Die Diebstahlsicherung kann nun bereits geraume Zeit vor dem Entriegeln und Vorklappen der Lehne deaktiviert werden, nach Wunsch auch ständig deaktiviert bleiben, ohne daß die Fahrsicherheit beeinträchtigt ist, insbesondere ohne daß die Lehne automatisch entriegelt ist. Umgekehrt wird mit einem Zurückklappen und Verriegeln der Lehne die Diebstahlsicherung nicht notwendigerweise automatisch aktiviert, sondern vorzugsweise erst durch eine gezielte Betätigung des Diebstahlsicherungselementes. Dies alles erhöht den Bedienkomfort bei gleichbleibender Sicherheit für die Insassen. Das Diebstahlsicherungselement braucht nicht unbedingt ein Hebel im Kofferraum zu sein. Es kann auch der Kofferraumdeckel oder direkt oder indirekt ein Bestandteil der Zentralverriegelung sein.

Zum Übergang in einen entsicherten und entriegelten Zustand des Verriegelungssystem wird das Schloß durch ein Betätigen des von der Sperre freigegebenen Entriegelungselementes entriegelt, wobei zwischen dem Schloß und dem Entriegelungselement und/oder zwischen dem Entriegelungselement und dem Diebstahlsicherungselement ein Bowdenzug vorgesehen ist, welcher die Betätigung überträgt und zugleich räumlich beabstandete Anordnungen der Bauteile erlaubt. Zusammen mit dem Bowdenzug kann eine Feder eingesetzt werden, um eine Kraft auf den Bowdenzug zu geben und/oder um eine bestimmte Stellung der Bauteile auszuzeichnen.

Bei verriegeltem Schloß schaltet das Diebstahlsicherungselement zwischen gesichertem und ungesichertem Zustand. Eine Möglichkeit besteht darin, daß das Entriegelungselement zunächst zwischen zwei Stellungen bewegt wird, allerdings ohne dabei das Schloß zu entriegeln. Hierfür steht vorzugsweise ein Endabschnitt der Seele des Bowdenzuges zwischen Entriegelungselement und Schloß im gesicherten und verriegelten Zustand in der Öffnungsrichtung des Entriegelungselementes über dieses über, d.h. das Entriegelungselement steht noch nicht mit dem Schloß in Wirkverbindung, während im entsicherten und verriegelten Zustand das Entriegelungselement so weit bewegt ist, daß der besagte Endabschnitt am Entriegelungselement anliegt, d.h. das Entriegelungselement in direkter Wirkverbindung mit dem Schloß steht. Die Sperre kann beispielsweise ein schwenkbarer oder sonstwie beweglicher Riegel sein, welcher im gesicherten und verriegelten Zustand in der Öffnungsrichtung des Entriegelungselementes vor diesem angeordnet ist, und beim Entsichern wegbewegt wird, worauf das Entriegelungselement beispielsweise aufgrund einer Vorspannung sich in eine andere, mehr in Öffnungsrichtung gelegene Stellung bewegt. Das Entriegeln erfolgt durch eine weitere Bewegung des Entriegelungselementes in Öffnungsrichtung.

Eine weitere Möglichkeit besteht darin, daß das Entriegelungselement zunächst abgedeckt und vorzugsweise auch festgelegt ist und beim Entsichern freigegeben wird, insbesondere auch zugänglich wird. Die Sperre kann beispielsweise ein Schieber sein, welcher im gesicherten und verriegelten Zustand seitlich des Entriegelungselementes, vorzugsweise in der Öffnungsrichtung des Entriegelungselementes oder tangential dazu, und insbesondere entlang einer Oberseite eines Gehäuses des Entriegelungselementes angeordnet ist. Zum Übergang in den entsicherten und verriegelten Zustand wird der Schieber vom Diebstahlsicherungselement beiseite geschoben oder gezogen, beispielsweise in die Öffnungsrichtung des Entriegelungselementes. Das Entriegeln erfolgt nun durch eine Bewegung des zugänglich gemachten Entriegelungselementes in Öffnungsrichtung.

Zur Erzeugung der Sperrwirkung im gesicherten und entriegelten Zustand kann in beiden Möglichkeiten an der Sperre und/oder am Entriegelungselement eine Nase, also eine seitlich zur Bewegungsrichtung vorspringende Materialpartie vorgesehen sein, welche einen sicheren Formschluß ermöglicht. Um den entsicherten und verriegelten Zustand und/oder den entsicherten und entriegelten Zustand des Verriegelungssystems anzuzeigen, ist am Entriegelungselement vorzugsweise wenigstens ein Indikator angeordnet, welcher sich insbesondere durch eine Signalfarbgebung und gegebenenfalls räumlich unterschiedlich ausgerichtete Flächen von der Umgebung abhebt.

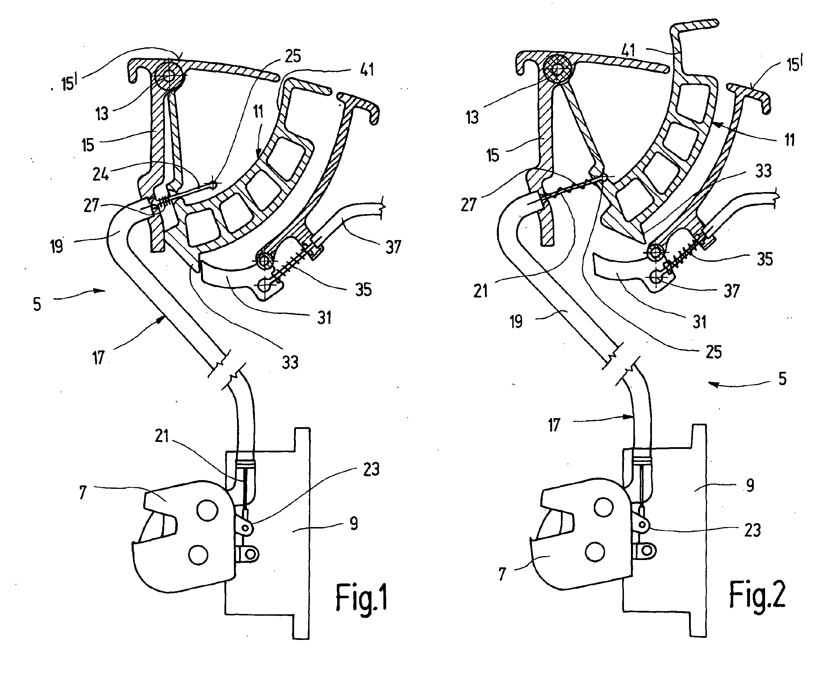

Im folgenden ist die Erfindung anhand zweier in der Zeichnung dargestellter Ausführungsbeispiele näher erläutert. Es zeigen
- Fig. 1: eine Ansicht des ersten Ausführungsbeispiels im gesicherten und verriegelten Zustand,
- Fig. 2: eine Fig. 1 entsprechende Ansicht im entsicherten und verriegelten Zustand,

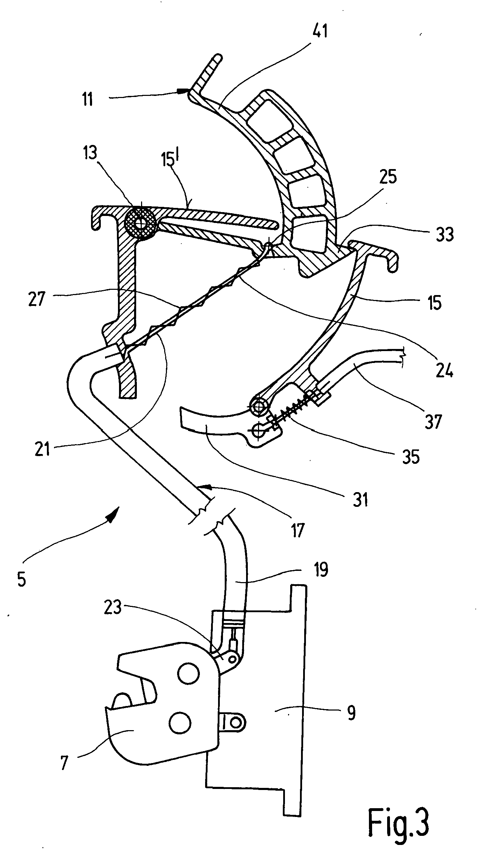

- Fig. 3: eine Fig. 1 entsprechende Ansicht im entsicherten und entriegelten Zustand,

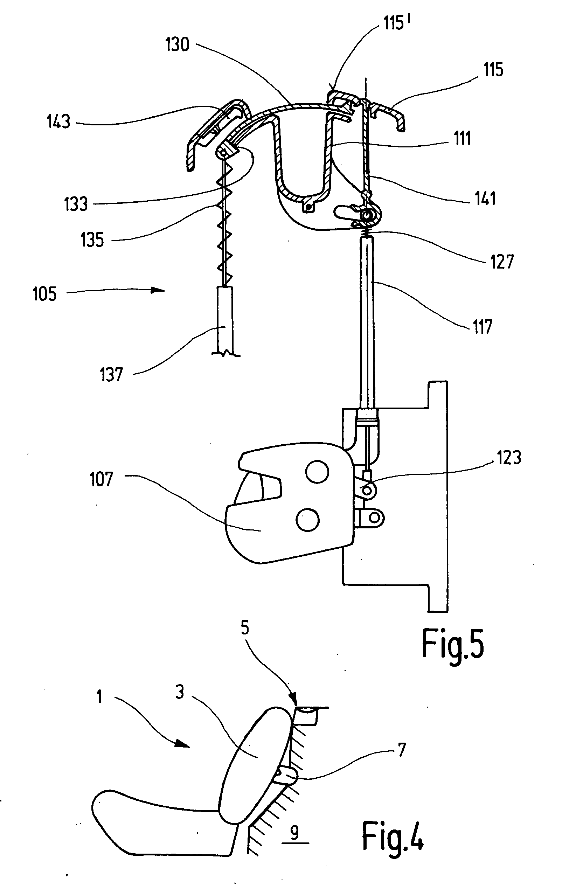

- Fig. 4: einen mit dem ersten Ausführungsbeispiel versehenen, schematisierten Fahrzeugsitz,
- Fig. 5: eine Ansicht des zweiten Ausführungsbeispiels im gesicherten und verriegelten Zustand,

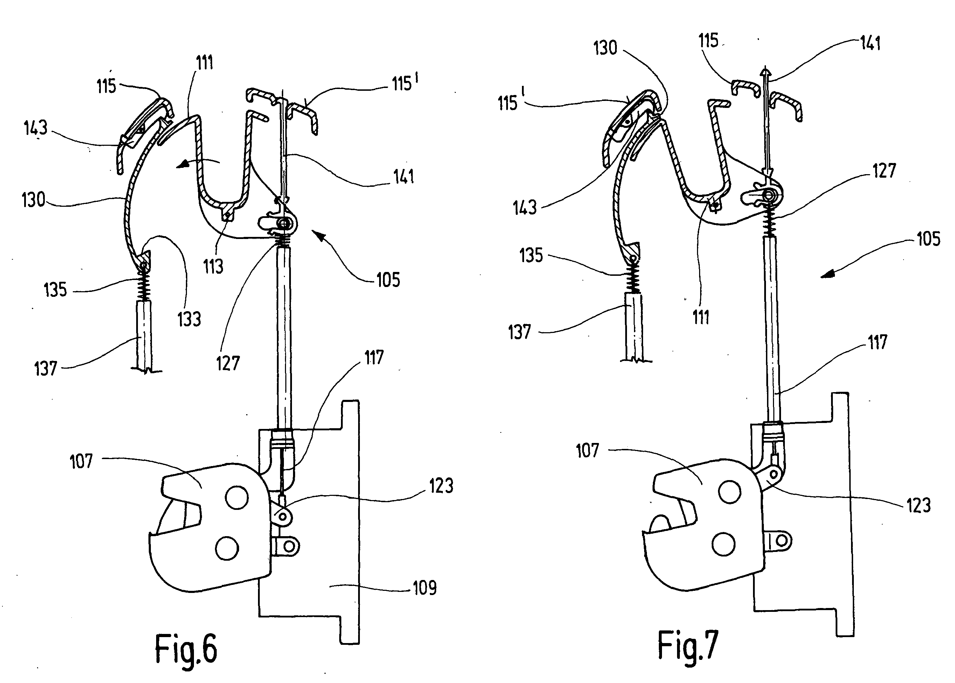

- Fig. 6: eine Fig. 5 entsprechende Ansicht im entsicherten und verriegelten Zustand, und
- Fig. 7: eine Fig. 5 entsprechende Ansicht im entsicherten und entriegelten Zustand.

Ein Fahrzeugsitz 1, welcher als Rücksitz eines Kraftfahrzeuges mit Stufenheck ausgebildet ist, weist für jeden Teil seiner mehrteiligen, schwenkbaren Lehne 3 je ein Verriegelungssystem 5 auf. Die Anordnung des Fahrzeugsitzes 1 im Kraftfahrzeug und dessen gewöhnliche Fahrtrichtung definieren die verwendeten Richtungsangaben. Das Verriegelungssystem 5 weist ein Schloß 7 auf, welches fest an der Fahrzeugstruktur 9 angebracht ist und auf an sich bekannte Weise mit einem nicht näher dargestellten Bolzen der Lehne 3 zusammenwirkt, um diese zu verriegeln.

In der Nachbarschaft der Oberkante der Lehne 3 ist ein griffartiges Entriegelungselement 11 um eine horizontale Achse 13 schwenkbar in einem Gehäuse 15 gelagert, welches mit der Fahrzeugstruktur 9 verbunden und beispielsweise mit seiner Oberseite 15' in der Hutablage angeordnet ist. Zwischen dem Entriegelungselement 11 und dem in seiner Nähe angeordneten Schloß 7 ist ein erster Bowdenzug 17 geführt, dessen Hülle 19 einerseits beim Schloß 7 an der Fahrzeugstruktur 9 und andererseits am Gehäuse 15 abgestützt ist, während die Seele 21 einerseits an einem Entriegelungshebel 23 des Schlosses 7 angebracht ist und andererseits in das Entriegelungselement 11 eingeführt ist und im gesicherten und verriegelten Zustand mit einem Endabschnitt 24 mit Kopf 25 in die Öffnungs-Schwenkrichtung (in der Zeichnung entgegen dem Uhrzeigersinn) des Entriegelungselementes 11 übersteht. Da das Schloß 7 selbsttätig verriegelt bleibt, ist die Seele 21 spannungslos.

Eine um die Seele 21 gewickelte erste Feder 27, welche einerseits am Gehäuse 15 und andererseits am Entriegelungselement 11 abgestützt ist, spannt das Entriegelungselement 11 in die Öffnungs-Schwenkrichtung vor. Das Entriegelungselement 11 wird gesichert durch einen schwenkbar am Gehäuse 15 gelagerten Riegel 31, welcher in die Schließ-Schwenkrichtung (in der Zeichnung im Uhrzeigersinn) weist und zum Sperren des Entriegelungselementes 11 an einer Nase 33 desselben anliegt. Eine zwischen dem Riegel 31 und dem Gehäuse 15 wirkende zweite Feder 35 spannt den Riegel 31 auf das Entriegelungselement 11 zu. Die zweite Feder 35 ist um einen zweiten Bowdenzug 37 gewickelt, welcher den Riegel 31 mit einem im Kofferraum des Kraftfahrzeuges angeordneten, hebelartigen Diebstahlsicherungselement verbindet. Durch diese räumliche Verlagerung und Beabstandung des Diebstahlsicherungselementes zum Entriegelungselement 11 und zum Schloß 7 und durch eine Wahl der Abmessung, bei der das Entriegelungselement 11 im beschriebenen gesicherten und verriegelten Zustand bündig mit der Oberseite 15' des Gehäuses 15 abschließt und damit für einen Entriegelungsvorgang unzugänglich ist, ergibt sich eine Diebstahlsicherung, die vorliegend aktiviert ist.

Für den Übergang in einen entsicherten und verriegelten Zustand des Verriegelungssystems 5 erfolgt ein Entsichern durch ein Deaktivieren der Diebstahlsicherung. Hierzu wird das im Kofferraum gelegene Diebstahlsicherungselement betätigt, welches mittels des zweiten Bowdenzuges 37 den als Sperre wirkenden Riegel 31 von der Nase 33 abzieht. Die erste Feder 27 kann nun das Entriegelungselement 11 so weit in die Öffnungs-Schwenkrichtung schwenken, daß es am Kopf 25 des ersten Bowdenzuges 17 anliegt. Das Entriegelungselement 11 steht nun in Wirkverbindung mit dem Schloß 7, wobei die Kraft der ersten Feder 27 zu gering ist, um den Entriegelungshebel 23 des Schlosses 7 zu betätigen. Durch die Schwenkbewegung ragt ein Indikator 41, welcher einen Bestandteil des Entriegelungselementes 11 bildet, aus einer Öffnung an der Oberseite 15' des Gehäuses 15 heraus und steht über die Oberseite 15' über. Der entsicherte und verriegelte Zustand wird dadurch angezeigt. Vorzugsweise ist die Vorderseite des Indikators 41 farblich ausgezeichnet, damit dieser Zustand vom Fahrersitz aus besser erkannt werden kann. Die zweite Feder 35 bringt den Riegel 31 zurück in seine Ausgangsposition, in welcher er nun jedoch in Öffnungs-Schwenkrichtung hinter der Nase 33 gelegen ist.

Für den Übergang in den (entsicherten und) entriegelten Zustand des Verriegelungssystems 5 wird nun das Entriegelungselement 11 ergriffen und manuell weiter in die Öffnungs-Schwenkrichtung geschwenkt. Dabei wird mittels des Kopfes 25 und der Seele 21 der Entriegelungshebel 23 betätigt, welcher das Schloß 7 öffnet, welches selbsttätig geöffnet bleibt. Das bis zur Anlage der Nase 33 an das Gehäuse 15, also nahezu vollständig aus dem Gehäuse 15 herausgeschwenkte Entriegelungselement 11 dient zum Anzeigen dieses Zustandes des Verriegelungssystems 5, wobei auch hier zum besseren Erkennen eine besondere farbliche Ausgestaltung vorgesehen sein kann. Die freigegebene Lehne 3 kann nun geschwenkt werden, womit sich zusätzlich zum Kofferraum eine weitere Ladefläche ergibt.

Beim Zurückschwenken der Lehne 3 verriegelt der ins Schloß 7 fallende Bolzen der Lehne 3 automatisch das Schloß 7. Der Entriegelungshebel 23 zieht nun mittels der Seele 21 das Entriegelungselement 11 so weit in das Gehäuse 15 zurück, bis der zuvor beschriebene entsicherte und verriegelte Zustand erreicht ist, in welchem nur der Indikator 41 über die Oberseite 15' des Gehäuses 15 übersteht. Zur Rückkehr in den gesicherten und verriegelten Zustand muß zunächst die Diebstahlsicherung wieder vom Kofferraum aus aktiviert werden, welche den Riegel 31 in seine Ausgangsposition bringt. In abgewandelter Ausführung könnte der Riegel 31 durch eine Feder unmittelbar nach dem Deaktivieren der Diebstahlsicherung in seine Ausgangsposition zurückgebracht werden. Dann wird das Entriegelungselement 11 am Indikator 41 manuell entgegen der Kraft der ersten Feder 27 in das Gehäuse 15 gedrückt, wodurch das Entriegelungselement 11 vom Kopf 25 gelöst und der Endabschnitt 24 wieder freigegeben wird. Mit dieser Schwenkbewegung gelangt das Entriegelungselement 11 auch zum Riegel 31, welcher in Anlage an die allmählich radial anwachsende Form der Nase 33 kommt, wodurch er kurzzeitig zur Seite gedrückt wird, bis er wieder aufgrund der Kraft der zweiten Feder 35 nach dem Passieren der Nase 33 zurückschnappt, wodurch dann der entsicherte und verriegelte Zustand erreicht wird. Ohne Aktivierung der Diebstahlsicherung würde das Entriegelungselement 11 am Riegel 31 vorbeischwenken und würde nicht gehalten werden, d.h. nach dem Loslassen des Indikators 41 würde die erste Feder 27 durch Schwenken des Entriegelungselementes 11 das Verriegelungssystem 5 wieder in den entsicherten und verriegelten Zustand bringen.

Ein zweites Ausführungsbeispiel gleicht dem zuvor beschriebenen ersten Ausführungsbeispiel, soweit nachfolgend nicht abweichend beschrieben, weshalb gleiche und gleichwirkende Bauteile um 100 höhere Bezugszeichen tragen. Das Verriegelungssystem 105 des zweiten Ausführungsbeispiels weist ebenfalls ein fahrzeugstrukturfestes Schloß 107 und ein Entriegelungselement 111 auf, welches um eine Achse 113 schwenkbar in einem fest mit der Fahrzeugstruktur 109 verbundenen Gehäuse 115 gelagert ist. Das Entriegelungselement 111 steht mittels eines ersten Bowdenzuges 117 in Wirkverbindung mit einem Entriegelungshebel 123 des Schlosses 107. Eine erste Feder 127 spannt das Entriegelungselement 111 in der Öffnungs-Schwenkrichtung (in der Zeichnung entgegen dem Uhrzeigersinn) vor, jedoch reicht die Kraft nicht aus, um den Entriegelungshebel 123 zu betätigen.

Ein Schieber 130, welcher ungefähr parallel zur Oberseite 115' des Gehäuses 115 und zugleich entlang der Bewegungsrichtung des Entriegelungselementes 111 beweglich geführt ist, deckt im gesicherten und verriegelten Zustand das vollständig innerhalb des Gehäuses 115 angeordnete Entriegelungselement 111 so ab, daß die Zugangsmöglichkeit zu letzterem gesperrt ist. Vorzugsweise ist am Schieber 130 noch eine Nase 133 angeformt, an welcher das Entriegelungselement 111 anliegt, so daß auch eine mißbräuchliche oder unbeabsichtigte Bewegung des Entriegelungselementes 111 verhindert wird. Der Schieber 130 steht mittels eines zweiten Bowdenzuges 137 in Wirkverbindung mit einem im Kofferraum des Kraftfahrzeuges angeordneten, hebelartigen Diebstahlsicherungselement. Eine zunächst nahezu entspannte zweite Feder 135 hält den Schieber 130 in der beschriebenen Stellung.

Für den Übergang in einen entsicherten und verriegelten Zustand des Verriegelungssystems 105 erfolgt wiederum ein Entsichern durch ein Deaktivieren der Diebstahlsicherung. Beim Betätigen des im Kofferraum gelegenen Diebstahlsicherungselementes wird mittels des zweiten Bowdenzuges 137 der als Sperre wirkende Schieber 130 so weit zurückgezogen, daß der Zugang zum Entriegelungselement 111 freigegeben ist. Bei dieser Bewegung des Schiebers 130 wird die zweite Feder 135 gespannt. Vorzugsweise ist im Gehäuse 115 eine Klinke 143 gelagert, welche - beispielsweise federbelastet - den Schieber 130 in dieser Position hält.

Für den Übergang in den (entsicherten und) entriegelten Zustand des Verriegelungssystems 105 wird nun das Entriegelungselement 111 ergriffen und manuell in die Öffnungs-Schwenkrichtung geschwenkt, unterstützt durch die sich entspannende erste Feder 127. Mittels des ersten Bowdenzuges 117 wird der Entriegelungshebel 123 beaufschlagt, welcher das Schloß 107 öffnet, welches selbsttätig geöffnet bleibt. Ein am ersten Bowdenzug 117 befestigter oder am Entriegelungselement 111 angelenkter Indikator 141 fährt durch diese Schwenkbewegung des Entriegelungselementes 111 aus dem Gehäuse 115 aus und steht über die Oberseite 115' über, um diesen entsicherten und entriegelten Zustand des Verriegelungssystems 105 anzuzeigen. Ein Vorschwenken der Lehne ist nun möglich.

Beim Zurückschwenken der Lehne verriegelt das Schloß 107 wieder automatisch, wobei der Entriegelungshebel 123 mittels des ersten Bowdenzuges 117 das Entriegelungselement 111 wieder zurückschwenkt, die erste Feder 127 vorspannt und den Indikator 141 einfährt. Zur Rückkehr in den gesicherten und verriegelten Zustand wird die Klinke 143 betätigt, beispielsweise mittels eines von der Oberseite 115' des Gehäuses 115 zugänglichen Knopfes, worauf die Klinke 143 den Schieber 130 freigibt, welchen die zweite Feder 135 in die Ausgangsposition bringt, in welcher er das Entriegelungselement 111 abdeckt. Zugleich zieht die zweite Feder 135 den zweiten Bowdenzug 137 mit, worauf das Diebstahlsicherungselement im Kofferraum in seine Ausgangsposition gebracht wird. In abgewandelter Ausführung ohne Klinke 143 - ähnlich dem ersten Ausführungsbeispiel - ist für die Rückkehr des Schiebers 130 das Diebstahlsicherungselement im Kofferraum zu betätigen. Umgekehrt kann ein Mechanismus mit Klinke auch beim ersten Ausführungsbeispiel vorgesehen sein, um den dortigen Riegel zu halten.

In einer gemeinsamen Abwandlung beider Ausführungsbeispiele bildet der Kofferraumdeckel das Diebstahlsicherungselement, d.h. je nach Stellung des Kofferraumdeckels wird der zweite Bowdenzug 37 bzw. 137 beaufschlagt.

In einer weiteren gemeinsamen Abwandlung beider Ausführungsbeispiele ist eine Kopplung an die Zentralverriegelung vorgesehen, d.h. der zweite Bowdenzug (oder ein anderes, elektromechanisches oder pneumatisches Stellelement) ist direkt an die Zentralverriegelung angeschlossen oder indirekt, beispielsweise an das Kofferraumdeckelschloß, wobei dann die Zentralverriegelung bzw. das Kofferraumdeckelschloß das Diebstahlsicherungselement bilden.

### Bezugszeichenliste

- 1: Fahrzeugsitz
- 3: Lehne
- 5, 105: Verriegelungssystem
- 7, 107: Schloß
- 9, 109: Fahrzeugstruktur
- 11, 111: Entriegelungselement
- 13, 113: Achse
- 15, 115: Gehäuse
- 15', 115': Oberseite
- 17, 117: erster Bowdenzug
- 19: Hülle
- 21: Seele
- 23, 123: Entriegelungshebel
- 24: Endabschnitt
- 25: Kopf
- 27, 127: erste Feder
- 31: Riegel, Sperre
- 33, 133: Nase
- 35, 135: zweite Feder
- 37, 137: zweiter Bowdenzug
- 41, 141: Indikator
- 130: Schieber, Sperre
- 143: Klinke

## Patentansprüche

1. Verriegelungssystem für einen Fahrzeugsitz, insbesondere für einen Kraftfahrzeugsitz, mit einem Schloß (7; 107) zum Verriegeln einer Lehne (3) des Fahrzeugsitzes (1), einem Entriegelungselement (11; 111), welches wenigstens zum Entriegeln mit dem Schloß (7; 107) in Wirkverbindung steht, wobei das Entriegeln mit dem Betätigen eines Diebstahlsicherungselementes beginnt, **dadurch gekennzeichnet, daß** das Diebstahlsicherungselement in Wirkverbindung mit einer Sperre (31; 130) steht, welche in einem gesicherten und verriegelten Zustand des Verriegelungssystems (5; 105) das Entriegelungselement (11; 111) und/oder dessen Zugänglichkeit sperrt und in einem entsicherten und verriegelten Zustand das Entriegelungselement (11; 111) freigibt.

2. Verriegelungssystem nach Anspruch 1, **dadurch gekennzeichnet, daß** das Entriegelungselement (11; 111) in der Nähe des Schlosses (7; 107) und/oder an der Lehne (3) oder in der Nachbarschaft der Lehne (3) angeordnet ist.

3. Verriegelungssystem nach Anspruch 1 oder 2, **dadurch gekennzeichnet, daß** das Diebstahlsicherungselement beabstandet vom Entriegelungselement (11; 111) und/oder vom Schloß (7; 107) angeordnet ist.

4. Verriegelungssystem nach einem der Ansprüche 1 bis 3, **dadurch gekennzeichnet, daß** zum Übergang in einen entsicherten und entriegelten Zustand des Verriegelungssystem (5; 105) ein Betätigen des von der Sperre (31; 130) freigegebenen Entriegelungselementes (11; 111) das Schloß (7; 107) entriegelt.

5. Verriegelungssystem nach einem der Ansprüche 1 bis 4, **dadurch gekennzeichnet, daß** zwischen dem Schloß (7; 107) und dem Entriegelungselement (11; 111) und/oder zwischen dem Entriegelungselement (11; 111) und dem Diebstahlsicherungselement ein Bowdenzug (17, 37; 117; 137) vorgesehen ist.

6. Verriegelungssystem nach Anspruch 5, **dadurch gekennzeichnet, daß** ein Endabschnitt (24) der Seele (21) des Bowdenzuges (17) im gesicherten und verriegelten Zustand in der Öffnungsrichtung des Entriegelungselementes (11) über dieses übersteht und/oder im entsicherten und verriegelten Zustand am Entriegelungselement (11) anliegt.

7. Verriegelungssystem nach einem der Ansprüche 1 bis 6, **dadurch gekennzeichnet, daß** als Sperre ein beweglicher Riegel (31) vorgesehen ist, welcher im gesicherten und verriegelten Zustand in der Öffnungsrichtung des Entriegelungselementes (11) vor diesem angeordnet ist und zum Übergang in den entsicherten und verriegelten Zustand aus dieser Position entfernt wird.

8. Verriegelungssystem nach einem der Ansprüche 1 bis 6, **dadurch gekennzeichnet, daß** als Sperre ein Schieber (130) vorgesehen ist, welcher im gesicherten und verriegelten Zustand insbesondere entlang einer Oberseite (115') eines Gehäuses (115) des Entriegelungselementes (111) angeordnet ist und zum Übergang in den entsicherten und verriegelten Zustand aus dieser Position entfernt wird.

9. Verriegelungssystem nach einem der Ansprüche 1 bis 8, **dadurch gekennzeichnet, daß** an der Sperre (31; 130) und/oder am Entriegelungselement (11; 111) eine Nase (33; 133) vorgesehen ist, welche durch Anlage am Entriegelungselement (11; 111) bzw. an der Sperre (31; 130) die Sperrwirkung für das Entriegelungselement (11; 111) erzeugt.

10. Verriegelungssystem nach einem der Ansprüche 1 bis 9, **dadurch gekennzeichnet, daß** am Entriegelungselement (11; 111) wenigstens ein Indikator (41; 141) angeordnet ist, welcher den entsicherten und verriegelten Zustand und/oder den entsicherten und entriegelten Zustand des Verriegelungssystems (5; 105) anzeigt.

11. Fahrzeugsitz (1) mit einer Lehne (3), **gekennzeichnet durch** einen Verriegelungssystem (5) nach einem der Ansprüche 1 bis 10.
